# FASCICULE DE BREVET EUROPEEN

(11) **EP 3 827 973 B1**
(45) Date de publication et mention de la délivrance du brevet: **01.11.2023**
(21) Numéro de dépôt: 20198739.3
(22) Date de dépôt: 28.09.2020
(51) Int. Cl.: B29C 70/16, B29C 70/44, B29C 70/54, B29K 105/24

(54) **PROCEDE DE FABRICATION D'UNE PIECE EN MATERIAU COMPOSITE COMPORTANT UNE PREMIERE PUIS UNE DEUXIEME POLYMERISATION**
VERFAHREN ZUR HERSTELLUNG EINES VERBUNDWERKSTÜCKS, DAS EINE ERSTE UND DANACH EINE ZWEITE POLYMERISIERUNG UMFASST
METHOD FOR MANUFACTURING A PART MADE FROM A COMPOSITE MATERIAL COMPRISING A FIRST AND THEN A SECOND POLYMERISATION

(30) Priorité: 22.10.2019 FR 1911796
(43) Date de publication de la demande: 02.06.2021
(73) Titulaire: AIRBUS OPERATIONS (S.A.S.), 31060 Toulouse (FR)
(72) Inventeur: PRIDIE, Jago, 31060 TOULOUSE Cedex 9 (FR); DUTHILLE, Bertrand, 31060 TOULOUSE Cedex 9 (FR)
(74) Mandataire: Jardel, Marc Henry Philippe

(56) Documents cités:
- CA-A1- 2 622 213
- Kristian Zimmermann: "Ultra Thick Laminates for Compact Load Introduction Fittings", , 24 octobre 2011 (2011-10-24), XP055709878, Extrait de l'Internet: URL:https://pdfs.semanticscholar.org/08e5/ 984c4b92e8a9638cc9501dcc8447016a9435.pdf [extrait le 2020-06-29]
- N. N.: "HexFlow RTM6 180°C Mono-component epoxy system for Resin Transfer Moulding and Infusion Tech ologies - Product Data Sheet", , 31 décembre 2018 (2018-12-31), XP055709882, Extrait de l'Internet: URL:https://www.hexcel.com/user_area/conte nt_media/raw/RTM6_DataSheetPDF.pdf [extrait le 2020-06-29]

## Description

### Domaine technique

La présente invention se rapporte à un procédé de fabrication d'une pièce en matériau composite comportant une première puis une deuxième polymérisation.

### Etat de la technique antérieure

Une pièce en matériau composite est constituée d'un renfort comportant des fibres imprégnées d'une matrice en résine. Les fibres peuvent être tissées ou non.

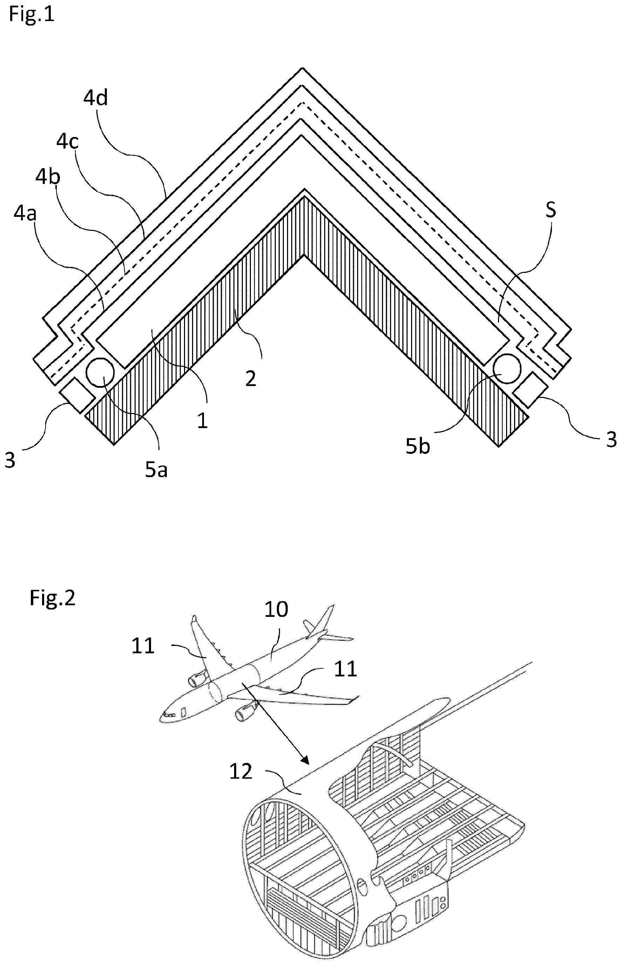

Selon un mode de réalisation connu, une telle pièce composite peut être réalisée selon un procédé par infusion de résine, « Liquid Resin Infusion » en anglais. Lors d'un tel procédé, des fibres sèches sont mises sous vide par le biais d'un film de mise sous vide 4d sur une contre forme 2, tel que représente en figure 1. Les fibres sèches sont ensuite imprégnées par de la résine qui migre grâce au vide. Un tel procédé comporte une première étape, dite de drapage, durant laquelle les fibres sèches sont drapées ou empilées sur la contre forme 2. Lors d'une deuxième étape, dite d'habillage, des consommables d'infusion sont mis en place. On entend par « consommable d'infusion » tous les éléments nécessaires à l'infusion du renfort. Durant cette étape d'habillage, les fibres sèches sont recouvertes par des tissus périphériques. Les tissus périphériques sont, à titre d'exemples, un tissu d'arrachage 4a disposé sur les fibres sèches, une membrane semi poreuse 4b couvrant le tissu d'arrachage 4a, un tissu de drainage 4c couvrant le tissu d'arrachage 4b. Pour permettre une infusion des fibres homogène, l'infusion s'effectue sous vide. Les fibres sèches et les tissus périphériques sont dès lors recouverts d'un film de mise sous vide 4d, aussi appelé « vessie », configuré pour créer une enceinte hermétique S autour des fibres sèches. Selon un mode de réalisation, le film de mise sous vide 4d est scellé à la contre forme 2 par au moins un joint périphérique 3. Pour permettre l'apport de résine dans l'enceinte et l'aspiration de l'air pour créer du vide, le film de mise sous vide 4d comporte un premier orifice 5a relié à un moyen d'infusion et un deuxième orifice 5b relié à un moyen d'aspiration. Lors d'une troisième étape dite de compactage à chaud, les fibres sèches sont mises sous vide à une température de de compactage. Cette étape permet d'empêcher la formation de plis entre les fibres sèches et de compacter les fibres sèches lors de l'infusion de résine, ceci afin d'augmenter le taux volumique de fibres dans la pièce. Lors d'une quatrième étape, dite d'infusion, du vide est créé par l'aspiration de l'air par le moyen d'aspiration 5b et de la résine est injectée par le moyen d'infusion 5a. Sous l'action du vide, les fibres sèches sont infusées afin de créer le renfort 1. Lors d'une cinquième étape, dite de polymérisation, le renfort 1 est soumis à un cycle de polymérisation afin d'être consolidé et obtenir une pièce en matériau composite. Après l'étape de polymérisation, la pièce en matériau composite est démoulée et usinée au cours d'une sixième étape. La polymérisation d'une pièce en matériau composite peut générer un phénomène dit d'effet de bord due au fluage de la résine au travers des fibres sèches et induit une épaisseur de la pièce en matériau composite en périphérie inférieure à l'épaisseur souhaitée. L'usinage vise à supprimer la zone périphérique afin d'obtenir une pièce en matériau composite d'épaisseur constante. La pièce en matériau composite est dès lors fabriquée selon des dimensions supérieures aux dimensions finales souhaitées, en prévision de l'étape d'usinage. Des procédés pour fabriquer des pièces en matériau composite sont divulgués par "Kristian Zimmermann, Ultra Tick Laminates for Compact Load Introduction Fittings, thèse KTH Stockholm, 2011".

Le procédé selon l'art antérieur présente plusieurs inconvénients. En effet, l'usinage de la pièce composite solide nécessite l'utilisation d'outils spécifiques capables de découper une telle pièce ce qui rend cette étape chronophage et coûteuse. Lorsque la forme de la pièce en matériau composite ne correspond pas à la forme finale désirée, il n'est pas possible de la modifier, car la pièce n'est plus maniable. Il est dès lors nécessaire de la jeter. Enfin l'étape de compactage à chaud est chronophage, car il est nécessaire d'attendre que la température de compactage soit atteinte.

L'invention se rapporte à un procédé de fabrication d'une pièce en matériau composite visant à simplifier la fabrication d'une pièce en matériau composite.

### Exposé de l'invention

La présente invention propose un procédé de fabrication d'une pièce en matériau composite qui ne présente pas les inconvénients de l'art antérieur.

A cet effet, elle concerne un procédé de fabrication d'une pièce en matériau composite comportant un renfort composé de fibres imprégnées d'une matrice en résine. Le procédé est remarquable en ce qu'il comporte les étapes successives suivantes :
- Drapage et habillage à plat de fibres sèches sur une surface plane d'un outillage de drapage ;
- Infusion des fibres sèches par la résine ;
- Formage des fibres sèches sur un contre moule ;
- Première polymérisation à une première température de polymérisation, la première polymérisation étant configurée pour obtenir un durcissement de la résine de 20 à 30% afin d'obtenir un renfort intermédiaire, la première polymérisation étant postérieure à l'étape d'infusion et de formage ;
- Démoulage et usinage du renfort intermédiaire ;
- Deuxième polymérisation du renfort intermédiaire usiné à une deuxième température de polymérisation, la valeur de la deuxième température étant supérieure à la valeur de la première température.

Un tel procédé de fabrication permet de s'affranchir de l'étape de compactage de l'art antérieur, et de simplifier le procédé de fabrication, l'étape de drapage et d'habillage et l'étape d'infusion étant réalisées sur un même outillage. Si nécessaire après la première polymérisation, le renfort intermédiaire peut être retouché et usiné évitant ainsi d'être mis au rebut pour non-conformité.

Selon l'invention l'étape de formage est postérieure à l'infusion des fibres sèches.

Un tel procédé de fabrication comporte d'autres caractéristiques remarquables prises séparément ou en combinaison :
- l'étape d'infusion des fibres sèches est réalisée à une température d'infusion de 110°C ;
- l'étape de formage est réalisée à une température inférieure à 30°C ;
- la première polymérisation est réalisée à une température inférieure ou égale à 150°C, pendant une durée inférieure ou égale à 60 minutes, de préférence égale à 150°C pendant 60 minutes ;
- la deuxième polymérisation est réalisée à une température inférieure ou égale à 180°C pendant une durée inférieure ou égale à 120 minutes, de préférence égale à 180°C pendant 120 minutes.

### Brève description des dessins

D'autres performances, détails et avantages de l'invention ressortiront plus clairement de la description détaillée donnée ci-après à titre indicatif en relation avec des dessins parmi lesquels :
- la figure 1 est une vue en coupe d'un renfort et de consommables d'infusion lors d'une étape d'infusion d'un procédé par infusion de résine selon l'art antérieur ;
- la figure 2 est une vue en perspective d'un aéronef et d'un caisson central de voilure ;
- la figure 3 est une vue éclatée d'un caisson central de voilure comportant au moins une cornière d'un aéronef en matériau composite fabriquée à partir du procédé de fabrication d'une pièce en matériau composite conforme à un mode de réalisation de l'invention ;
- la figure 4 est une vue présentant les étapes d'un procédé de fabrication d'une pièce en matériau composite conforme à un mode de réalisation de l'invention ; et
- la figure 5 est une vue en coupe d'un outillage de drapage d'un renfort et de consommables d'infusion lors d'une étape d'infusion du procédé de fabrication d'une pièce en matériau composite.

### Exposé détaillé

Comme illustré sur la figure 2, la structure d'un aéronef comporte un fuselage 10 et une voilure 11 reliés par un caisson central de voilure 12.

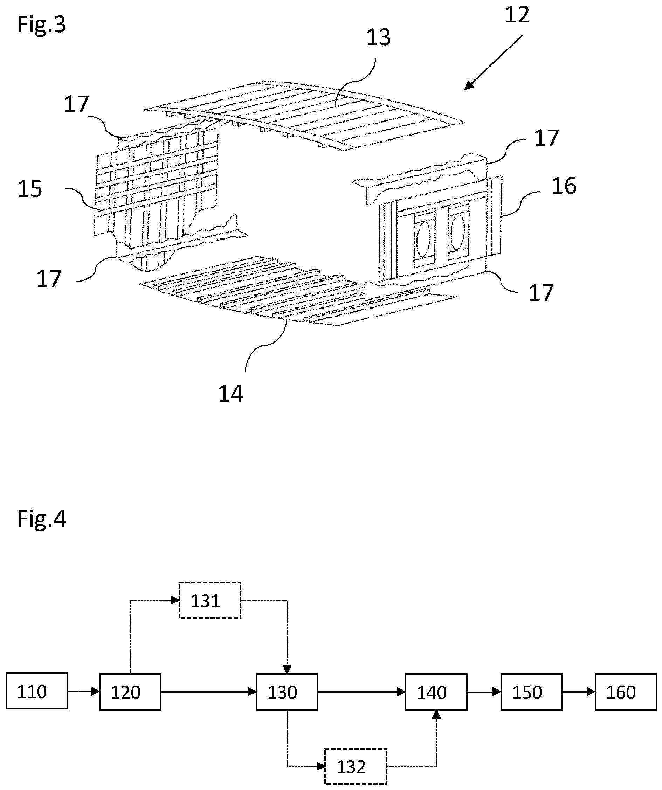

Un caisson central de voilure 12 peut être réalisé à partir de pièces en matériau composite, tels qu'un panneau supérieur 13, un panneau inférieur 14, un longeron avant 15 et un longeron arrière 16. Les panneaux supérieur et inférieur 13, 14 et les longerons avant et arrière 15, 16 sont assemblés deux à deux à l'aide de cornières en L 17 de manière à former le caisson central de voilure 12, tels que représentés en figure 3.

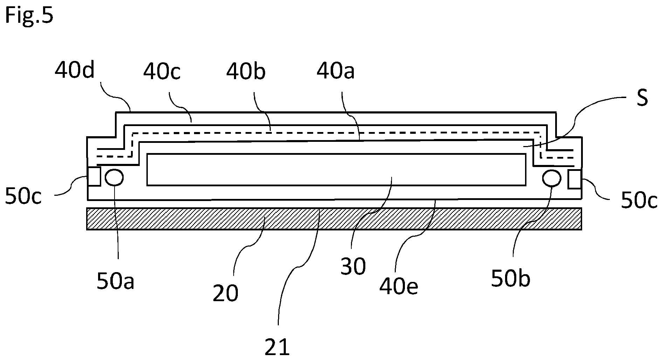

La figure 4 présente un procédé de fabrication d'une pièce en matériau composite d'un caisson central de voilure 12 d'un aéronef, par exemple une cornière en L 17. Le procédé comporte une première étape de drapage à plat 110 de fibres sèches. Les fibres sèches sont drapées à plat sur un premier film de mise sous vide 40e posé sur une surface plane 21 d'un outillage de drapage 20, tel que représenté en figure 5.

Cette étape est suivie par une étape d'habillage 120 configurée pour mettre en place des consommables d'infusion. A titre d'exemple, cette étape d'habillage 120 consiste à disposer successivement des tissus périphériques sur les plis de fibres sèches, tel qu'un tissu d'arrachage 40a disposé au-dessus des fibres sèches, une membrane semi poreuse 40b couvrant le tissu d'arrachage 40a, et un tissu de drainage 40c couvrant le tissu d'arrachage 40b. Les fibres sèches et les tissus périphériques sont maintenus dans une enceinte hermétique S par au moins un film de mise sous vide 40d. Les dimensions des tissus périphériques 40a, 40b, 40c et du au moins un film de mise sous vide 40d sont supérieures aux dimensions des fibres sèches afin que la périphérie des tissus périphériques 40a, 40b, 40c recouvre l'intégralité de la face libre des fibres sèches et recouvre partiellement l'outillage de drapage 20. Le film de mise sous vide 40d comporte un premier orifice 50a configuré pour être relié à un moyen d'infusion et un deuxième orifice 50b configuré pour être relié à un moyen d'aspiration. Ensuite, les premier et deuxième films de mise sous vide 40e et 40d sont joints en leur périphérie, afin de créer l'enceinte hermétique S autour des fibres sèches. Les premier et deuxième films de mise sous vide 40e et 40d peuvent être thermoscellés ou être joints par un joint périphérique 50c, formant ainsi un sac hermétique autour des fibres sèches.

Le procédé comporte ensuite une étape 130 d'infusion des fibres sèches. Lors d'une telle étape 130, le moyen d'infusion apporte de la résine dans l'enceinte hermétique S via la premier orifice 50a, et le moyen d'aspiration aspire l'air présent dans l'enceinte via le deuxième orifice 50b, entrainant la résine au travers des fibres sèches pour créer un renfort 30. Pour faciliter le déplacement de la résine au sein des fibres sèches, l'infusion s'effectue à une température d'infusion configurée pour réduire la viscosité de la résine, par exemple 110°C.

Selon une première variante, qui n'est pas inclue dans l'objet des revendications, le procédé comporte une étape de formage 131 antérieure à l'étape d'infusion 130. Lors d'une telle étape de formage 131, les fibres sèches enfermées dans le sac hermétique, sont positionnées sur une contre forme complémentaire à la forme de la pièce composite souhaitée. Lors de l'étape de formage 131, du vide peut être créé dans le sac hermétique favorisant la mise en forme des fibres sèches sur la surface de la contre forme.

Selon une deuxième variante, le procédé comporte une étape de formage 132 postérieure à l'étape d'infusion 130. L'étape d'infusion 130 est dès lors réalisée à plat, par exemple sur l'outillage de drapage 20, ce qui favorise le déplacement de la résine au travers des fibres sèches et accélère l'infusion par rapport à une infusion qui ne s'effectue pas à plat. Suite à l'étape d'infusion 130, le renfort 30 ainsi créé est déplacé sur une contre forme, non représentée sur les figures. La résine présente entre les fibres sert de lubrifiant et favorise le formage du renfort 30. L'étape de formage 132 se fait à température ambiante, de préférence à 30°C.

Une fois le renfort 30 positionné sur la contre forme, le procédé comprend une première polymérisation 140 du renfort 30 à une première température de polymérisation T1. Cette étape 140 est configurée pour obtenir un durcissement de la résine de 20 à 30%. Le renfort ainsi obtenu, appelé renfort intermédiaire, est maniable par un opérateur, c'est-à-dire qui n'est pas complètement solidifié et sa géométrie peut être modifiée. A titre d'exemple, la première polymérisation 140 inférieure ou égale à 150°C pendant une durée inférieure au égale à 60 minutes. De préférence la première polymérisation 140 est réalisée à une température T1 égale à 150°C, pendant 60 minutes.

Le procédé comporte ensuite une étape 150 de démoulage et d'usinage du renfort intermédiaire. Le renfort intermédiaire étant partiellement polymérisé et semi dure, il maintient la forme finale désirée tout en étant maniable pour retirer les consommables d'infusions, réaliser des retouches et procéder à de l'usinage. A titre d'exemples, des trous ou orifices peuvent être usinés, les bords périphériques peuvent être découpés pour adapter les dimensions du renfort 30 intermédiaire aux dimensions de la pièce en composite souhaitée et supprimer par la même occasion les effets de bords qui apparaissent lors d'une polymérisation, etc. Un usinage sur le renfort intermédiaire permet d'obtenir des bords usinés nets.

Une fois le renfort intermédiaire usiné, ce dernier est positionné sur la contre forme avant de subir une deuxième polymérisation 160 configurée pour solidifier le renfort intermédiaire et obtenir la pièce en matériau composite finale. La valeur de la deuxième température de polymérisation T2 est dès lors plus élevée que la valeur de la première température de polymérisation. A titre d'exemple, la deuxième polymérisation 160 s'effectue à une deuxième température de polymérisation T2 inférieure ou égale à 180°C pendant une durée inférieure ou égale à 120 minutes, de préférence 180°C pendant 120 minutes. Selon un mode de réalisation lors de la deuxième polymérisation 160 le renfort intermédiaire est polymérisé entre une partie femelle et une partie mâle d'un moule, favorisant dès lors une distribution homogène de la chaleur et une polymérisation homogène de renfort intermédiaire.

Les températures de polymérisation T1 et T2 peuvent être atteintes par rayonnement infra-rouge, au moyen de lampes infrarouges positionnées à proximité du renfort 30 ou par convection via l'outillage de formage 20.

## Revendications

1. Procédé de fabrication d'une pièce en matériau composite comportant un renfort (30) composé de fibres imprégnées d'une matrice en résine, le procédé comportant les étapes successives suivantes :
- Drapage (110) et habillage (120) à plat de fibres sèches sur une surface plane (21) d'un outillage de drapage (20) ;
- Infusion des fibres sèches (130) à plat par la résine ;
- Formage (131, 132) des fibres sèches infusées par la résine sur un contre moule ;
- Première polymérisation (140) à une première température de polymérisation (T1), la première polymérisation (140) étant configurée pour obtenir un durcissement de la résine de 20 à 30% afin d'obtenir un renfort intermédiaire, la première polymérisation (140) étant postérieure à l'étape d'infusion (130) et de formage (131, 132) ;
- Démoulage et usinage (150) du renfort intermédiaire ;
- Deuxième polymérisation (160) du renfort intermédiaire usiné à une deuxième température de polymérisation (T2), la valeur de la deuxième température (T2) étant supérieure à la valeur de la première température (T1).

2. Procédé de fabrication d'une pièce en matériau composite selon la revendication 1, **caractérisé en ce que** l'étape d'infusion des fibres sèches (130) est réalisée à une température d'infusion de 110°C.

3. Procédé de fabrication d'une pièce en matériau composite selon l'une quelconque des revendications précédentes, **caractérisé en ce que** l'étape de formage (131, 132) est réalisée à une température inférieure à 30°C.

4. Procédé de fabrication d'une pièce en matériau composite selon l'une quelconque des revendications précédentes, **caractérisé en ce que** la première polymérisation (140) est réalisée à une température (T1) inférieure ou égale à 150°C, pendant une durée inférieure ou égale à 60 minutes, de préférence égale à 150°C pendant 60 minutes.

5. Procédé de fabrication d'une pièce en matériau composite selon l'une quelconque des revendications précédentes, **caractérisé en ce que** la deuxième polymérisation (160) est réalisé à une température (T2) inférieure ou égale à 180°C pendant une durée inférieure ou égale à 120 minutes, de préférence égale à 180°C pendant 120 minutes.

## Patentansprüche

1. Verfahren zur Herstellung eines Teils aus Verbundmaterial, das eine Verstärkung (30) aufweist, die aus Fasern zusammengesetzt ist, die mit einer Harzmatrix imprägniert sind, wobei das Verfahren die folgenden aufeinanderfolgenden Schritte aufweist:
- Flaches Drapieren (110) und Ablegen (120) von trockenen Fasern auf einer ebenen Fläche (21) eines Drapierwerkzeugs (20);
- Flaches Infundieren der trockenen Fasern (130) mit dem Harz;
- Formen (131, 132) der mit dem Harz infundierten trockenen Fasern auf einer Gegenform:
- Erste Polymerisation (140) bei einer ersten Polymerisierungstemperatur (T1), wobei die erste Polymerisation (140) dazu ausgebildet ist, eine Aushärtung des Harzes von 20 bis 30 % zu erreichen, um eine Zwischenverstärkung zu erhalten, wobei die erste Polymerisation (140) nach dem Schritt des Infundierens (130) und des Formens (131, 132) erfolgt;
- Entformen und Bearbeiten (150) der Zwischenverstärkung;
- Zweite Polymerisation (160) der bearbeiteten Zwischenverstärkung bei einer zweiten Polymerisierungstemperatur (T2), wobei der Wert der zweiten Temperatur (T2) höher als der Wert der ersten Temperatur (T1) ist.

2. Verfahren zur Herstellung eines Teils aus Verbundmaterial nach Anspruch 1, **dadurch gekennzeichnet, dass** der Schritt des Infundierens der trockenen Fasern (130) bei einer Infusionstemperatur von 110 °C durchgeführt wird.

3. Verfahren zur Herstellung eines Teils aus Verbundmaterial nach einem der vorhergehenden Ansprüche, **dadurch gekennzeichnet, dass** der Schritt des Formens (131, 132) bei einer Temperatur unter 30 °C durchgeführt wird.

4. Verfahren zur Herstellung eines Teils aus Verbundmaterial nach einem der vorhergehenden Ansprüche, **dadurch gekennzeichnet, dass** die erste Polymerisation (140) bei einer Temperatur (T1) unter oder gleich 150 °C über eine Dauer kürzer oder gleich 60 Minuten, vorzugsweise gleich 150 °C 60 Minuten lang durchgeführt wird.

5. Verfahren zur Herstellung eines Teils aus Verbundmaterial nach einem der vorhergehenden Ansprüche, **dadurch gekennzeichnet, dass** die zweite Polymerisation (160) bei einer Temperatur (T2) unter oder gleich 180 °C über eine Dauer kürzer oder gleich 120 Minuten, vorzugsweise gleich 180 °C 120 Minuten lang durchgeführt wird.

## Claims

1. Method for manufacturing a part made of composite material comprising a reinforcement (30) made up of fibres impregnated with a resin matrix, the method comprising the following successive steps:
- flat laying (110) and covering (120) dry fibres on a planar surface (21) of a laying tool (20);
- infusing flat dry fibres (130) with the resin;
- forming (131, 132) the dry fibres infused with the resin on a counter-mould;
- first polymerization (140) at a first polymerization temperature (T1), the first polymerization (140) being configured to obtain 20% to 30% hardening of the resin in order to obtain an intermediate reinforcement, the first polymerization (140) being subsequent to the step of infusing (130) and of forming (131, 132);
- demoulding and machining (150) the intermediate reinforcement;
- second polymerization (160) of the machined intermediate reinforcement at a second polymerization temperature (T2), the value of the second temperature (T2) being greater than the value of the first temperature (T1).

2. Method for manufacturing a part made of composite material according to claim 1, **characterized in that** the step (130) of infusing dry fibres is performed at an infusion temperature of 110°C.

3. Method for manufacturing a part made of composite material according to either one of the preceding claims, **characterized in that** the forming step (131, 132) is performed at a temperature below 30°C.

4. Method for manufacturing a part made of composite material according to any one of the preceding claims, **characterized in that** the first polymerization (140) is performed at a temperature (T1) that is less than or equal to 150°C, for a duration that is less than or equal to 60 minutes, preferably that is equal to 150°C for 60 minutes.

5. Method for manufacturing a part made of composite material according to any one of the preceding claims, **characterized in that** the second polymerization (160) is performed at a temperature (T2) that is less than or equal to 180°C, for a duration that is less than or equal to 120 minutes, preferably that is equal to 180°C for 120 minutes.
